# EUROPÄISCHE PATENTSCHRIFT

(11) **EP 3 274 825 B1**
(45) Veröffentlichungstag und Bekanntmachung des Hinweises auf die Patenterteilung: **07.11.2018**
(21) Anmeldenummer: 17702800.8
(22) Anmeldetag: 25.01.2017
(51) Int. Cl.: G06F 21/52, G06F 8/52, G06F 21/51, G06F 21/57, G06F 9/445

(54) **VERFAHREN UND AUSFÜHRUNGSUMGEBUNG ZUM GESICHERTEN AUSFÜHREN VON PROGRAMMBEFEHLEN**
METHOD AND EXECUTION ENVIRONMENT FOR THE SECURE EXECUTION OF PROGRAM INSTRUCTIONS
PROCÉDÉ ET ENVIRONNEMENT D'EXÉCUTION POUR EXÉCUTER DE FAÇON SÉCURISÉE DES INSTRUCTIONS DE PROGRAMME

(30) Priorität: 09.02.2016 DE 102016201898
(43) Veröffentlichungstag der Anmeldung: 31.01.2018
(73) Patentinhaber: Siemens Aktiengesellschaft, 80333 München (DE)
(72) Erfinder: FALK, Rainer, 85586 Poing (DE); FISCHER, Kai, 85598 Baldham (DE); HEINTEL, Markus, 81377 München (DE); MERLI, Dominik, 86609 Donauwörth (DE); ASCHAUER, Hans, 81829 München (DE); KLASEN, Wolfgang, 85521 Ottobrunn (DE); PFAU, Axel, 80333 München (DE); PYKA, Stefan, 85570 Markt Schwaben (DE); SCHNEIDER, Daniel, 80796 München (DE)
(86) Internationale Anmeldenummer: PCT/EP2017/051476
(87) Internationale Veröffentlichungsnummer: WO 2017/137256

(56) Entgegenhaltungen:
- US-A1- 2005 039 164
- US-A1- 2011 271 344
- US-A1- 2013 305 228

## Beschreibung

Die Erfindung bezieht sich auf ein Verfahren und eine Ausführungsumgebung zum gesicherten Ausführen von Programmbefehlen einer Anwendung.

In modernen Automatisierungssystemen werden zur Steuerung IT-Systeme und Anwendungen eingesetzt. Im Zuge der Digitalisierung werden hochspezialisierte Einzellösungen durch generische Mehrzwecksysteme abgelöst. Diese Mehrzwecksysteme werden durch dynamische Konfiguration (der Anwendung) an den jeweiligen Einsatzzweck angepasst. Die für den speziellen Einsatzzweck nicht genutzte Funktionalität verbleibt dabei auf dem System. Prinzipiell stellt überflüssige/ungenutzte Funktionalität ein mögliches Risiko dar. Die Funktion kann (durch Manipulation) beabsichtigt oder unbeabsichtigt ausgeführt werden und zu einem ungewollten Systemzustand führen. Ein Beispiel ist der Heartbleed-Fehler bei SSL/TLS der lange in einem typischerweise nicht benötigtem Teil der betroffenen SSL/TLS Bibliothek verborgen war. Dennoch stand die Funktion auf den meisten Systemen zur Verfügung und konnte ausgenutzt werden.

Aus dem Stand der Technik sind das Dokument US 8,531,247 B2, das Dokument US 8,892,616 B2, das Dokument US 8,300,811 B2, das Dokument US 9,147,088 B2, das Dokument EP 2 605 445 B1, das Dokument EP 2 870 565 A1, das Dokument EP 2 891 102 A1 und das Dokument US 8 843 761 B2 bekannt.

Zusätzlich ist die Patentanmeldung US 2013/305228 A1 bekannt, die ein Verfahren zur Auswahl von Algorithmen und Funktionen aus einer Bibliothek offenbart.

Zusätzlich ist die Patentanmeldung US 2005/039164 A1 bekannt, die ein Verfahren zur Editierung von Programmcode offenbart.

Zusätzlich ist die Patentanmeldung US 2011/271344 A1 bekannt, die eine Schadmodulidentifikationsvorrichtung zur Identifizierung und Deaktivierung von bösartigen Modulen offenbart, die in einer Informationsverarbeitungsvorrichtung arbeiten.

Die Aufgabe der vorliegenden Erfindung ist es, ein Verfahren und eine Ausführungsumgebung zum gesicherten Ausführen von Programmbefehlen einer Anwendung bereitzustellen, das mit einem geringen Aufwand durchführbar ist.

Die Aufgabe wird durch die in den unabhängigen Ansprüchen angegebenen Merkmale gelöst. In den Unteransprüchen sind vorteilhafte Weiterbildungen der Erfindung dargestellt.

Gemäß einem ersten Aspekt betrifft die Erfindung zum gesicherten rechnergestützten Ausführen von Programmbefehlen einer Anwendung ein Verfahren mit den folgenden Verfahrensschritten:
In einem Verfahrensschritt wird ein Lernmodus einer Ausführungsumgebung eingeschaltet.

In einem weiteren Verfahrensschritt wird die Anwendung in der Ausführungsumgebung ausgeführt, während der Lernmodus eingeschaltet ist, wobei Programmbefehle der Anwendung für ein ausgewähltes vorgegebenes Anwendungsszenario durchlaufen werden und die Ausführungsumgebung eine erste anwendungsszenariospezifische Gültigkeitsinformation den durchlaufenen Programmbefehlen zuordnet.

In einem weiteren Verfahrensschritt wird ein Arbeitsmodus der Ausführungsumgebung eingeschaltet, wobei im Arbeitsmodus die Ausführungsumgebung die erste Gültigkeitsinformation der Programmbefehle überprüft, und wobei die Ausführungsumgebung die Programmbefehle abhängig von ihrer Gültigkeitsinformation ausführt.

Im Zusammenhang mit der Patentanmeldung kann unter einer Anwendung eine ausführbare Datei oder auch eine Programmbibliothek verstanden werden.

Im Zusammenhang mit der Patentanmeldung kann unter einer Ausführungsumgebung eine virtuelle Maschine, beispielsweise eine Java Virtual Machine, ein Prozessor oder eine Betriebssystemumgebung verstanden werden. Die Ausführungsumgebung kann auf einer physikalischen Recheneinheit (Prozessor, Mikrocontroller, CPU, CPU Core) realisiert sein. Dabei kann die Ausführung der Anwendung in einem Lernmodus und in einem Ausführungsmodus auf der selben physikalischen Recheneinheit erfolgen. Ebenso ist es beispielsweise möglich, dass die Ausführung der Anwendung in einem Lernmodus in einer anderen physikalischen Recheneinheit erfolgt. So kann z.B. das Anlernen beispielsweise in einer speziellen Anlern-Recheneinheit erfolgen. Die Ausführung in einem Ausführungsmodus erfolgt beispielsweise in einer zweiten Recheneinheit, wobei dabei die beim Anlernen ermittelte Gültigkeitsinformation bei der Ausführung in der Ausführungs-Recheneinheit verwendet wird. Die durch die Anlern-Recheneinheit beispielsweise ermittelte Gültigkeitsinformation wird vorzugsweise manipulationsgeschützt bereitgestellt.

Im Zusammenhang mit der Patentanmeldung können unter Programmbefehlen, die Programmbefehle verstanden werden, die eine Anwendung als Ganzes vorzugsweise inklusive der verwendeten Bibliotheken umfasst.

Im Zusammenhang mit der Patentanmeldung können unter Ausführungspfaden, Teilbereiche der Anwendung verstanden werden, die mehrere direkt aufeinander folgende auszuführende Programmbefehle umfassen und die insbesondere einer bestimmten Teilfunktionalität der Anwendung zugeordnet sind. Ausführungspfaden können auch Teilbereiche sein, die abhängig von einer Bedingung, beispielsweise "If-Else"-Bedingung ausgeführt werden.

Im Zusammenhang mit der Patentanmeldung können unter Gültigkeitsinformation/en eine erste Gültigkeitsinformation und/oder eine zweite Gültigkeitsinformation und/oder eine dritte Gültigkeitsinformation verstanden werden.

Im Zusammenhang mit der Patentanmeldung kann unter einem Gerät beispielsweise ein Steuergerät für ein Feuerlöschsystem, ein Überwachungsgerät zur Überwachung von Spannungsspitzen bei Hochspannung oder ein Feldgerät verstanden werden.

Im Zusammenhang mit der Patentanmeldung kann unter einem Anwendungsszenario oder einem ausgewählten vorgegebenen Anwendungsszenario, ein Anwendungsszenario für eine Anwendung verstanden werden, das nur einem bestimmten Zweck dient. Dies kann beispielsweise ein Steuergerät (auf dem die Anwendung läuft) sein, das in einer Kraftwerksanlage Spannungsspitzen überwacht und ggf. steuernd eingreift. Dabei können die Hardwarekomponenten mit denen das Steuerungsgerät kommuniziert und die Einsatzumgebung genau festgelegt sein. Das kann bedeuten, dass an die Anwendung beispielsweise nur Eingabewerte mit bestimmten erwarteten Wertebereichen übergeben werden, und auch nur Funktionen, oder deren Programmbefehle genutzt werden, die beispielsweise für eine Überwachung eines bestimmten Spannungsbereichs bei Hochspannung notwendig sind. Funktionen, die nur für Niederspannung verwendet werden würden, würden in einem ausgewählten vorgegebenen Anwendungsszenario für Hochspannung nicht durchlaufen bzw. verwendet werden.

Im Zusammenhang mit der Patentanmeldung kann unter "gültigkeitsinformationslos" verstanden werden, dass einem Programmbefehl und/oder einer Subroutine/Funktion und/oder einer Programmbibliothek keine Gültigkeitsinformation zugeordnet ist. Falls beispielsweise jedem Programmbefehl ein bestimmter Speicherbereich zugeordnet ist, indem die Gültigkeitsinformation abgelegt werden kann, so kann für einen gültigkeitsinformationslosen Programmbefehl dieser Speicherbereich beispielsweise mit Nullen oder einem anderen Wert belegt werden, der angibt, dass für diesen Programmbefehl keine Gültigkeitsinformation verfügbar ist. Unter "gültigkeitsinformationslos" kann zusätzlich verstanden werden, dass einem Programmbefehl eine Ungültigkeitsinformation zugeordnet ist.

Durch das Verfahren wird eine hohe Sicherheit für Anwendungen erreicht, die beispielsweise auf einem bestimmten Gerät, beispielsweise ein Feldgerät, ausgeführt werden, da eine Ausführung von gültigkeitsinformationslosen Programmbefehlen unterdrückt wird. Das bedeutet beispielsweise, dass nicht durchlaufene Programmbefehle gültigkeitsinformationslos, also keine Gültigkeitsinformation aufweisen. Bevor der Lernmodus aktiviert wird, können beispielsweise vorhandene Gültigkeitsinformationen wahlweise gelöscht werden, sodass vor dem Einschalten des Lernmodus keinem Programmbefehl eine Gültigkeitsinformation zugeordnet ist.

Auch ist es beispielsweise möglich, dass das Einschalten des Arbeitsmodus durch einen Sicherheitsmechanismus, beispielsweise einem Passwort oder einem Freischaltcode oder einem kryptographischen Verfahren insbesondere in Form eines digitalen Zertifikats oder einer Lizenzdateistruktur, geschützt ist.

Es sind beispielsweise auch unterschiedliche Betriebsmodi denkbar. So ist es beispielsweise möglich, dass der Lernmodus und der Arbeitsmodus parallel ausgeführt werden kann, damit die durchlaufenen Programmbefehle für das Anwendungsszenario möglichst vollständig erfasst werden. Es ist beispielsweise aber auch möglich, dass durch das Einschalten des Arbeitsmodus, der Lernmodus automatisch ausgeschaltet wird. Wird hingegen der Lernmodus eingeschaltet, wird der Arbeitsmodus automatisch ausgeschaltet. Je nach gewünschtem Verhalten der Betriebsmodi der Arbeitsumgebung, kann dies vorzugsweise konfiguriert werden.

Bei einer ersten Ausführungsform des Verfahrens werden die durchlaufenen Programmbefehle durchlaufenen Ausführungspfaden der Anwendung zugeordnet und es wird eine zweite anwendungsszenariospezifische Gültigkeitsinformation jeweils einem Ausführungspfad zugeordnet.

Dadurch, dass nur dem Ausführungspfad, beispielsweise bei einer "If-Else"-Bedingung, eine Gültigkeitsinformation zugeordnet wird, kann die Ausführungszeit des Verfahrens verbessert werden.

Bei weiteren Ausführungsformen des Verfahrens wird die erste Gültigkeitsinformation während einer ersten Lernphase zugeordnet und es wird während einer zweiten Lernphase durch die Ausführungsumgebung eine dritte anwendungsszenariospezifische Gültigkeitsinformation den durchlaufenen Programmbefehlen zuordnet.

Hierdurch ist es möglich, die Zuordnung der Gültigkeitsinformationen zu verbessern. Dies kann beispielsweise dadurch erfolgen, dass die erste Lernphase durchgeführt wird, wenn Funktionstests bei der Fertigung eines Gerätes auf dem die Anwendung ausgeführt werden soll, vorgenommen werden. Die zweite Lernphase kann dann beim Kunden ausgeführt werden, bei dem das Gerät und die Anwendung das ausgewählte vorgegebene Anwendungsszenario, beispielsweise eine Überlaststeuerung in einem Stromversorgungsnetz, ausführt. Dadurch ist es möglich, beim Kunden die Dauer zum Erfassen der Gültigkeitsinformation zu reduzieren.

Bei weiteren Ausführungsformen des Verfahrens wird als Ausführungsumgebung ein Prozessor und/oder eine virtuelle Maschine und/oder ein Betriebssystemkern oder ein Betriebssystemkern unter Verwendung einer Speicherverwaltungseinheit verwendet.

Je nach Anwendungsfall lässt sich hierdurch entweder eine einfacher zu implementierende Variante realisieren, indem beispielsweise den Programmbefehlen im Bytecode einer Java-Anwendung die Gültigkeitsinformation zugeordnet wird. Oder es wird eine sehr hohe Sicherheit beim Ausführen der Anwendung zu erreichen, indem auf einem Prozessor jeweils einem Maschinenbefehl eine Gültigkeitsinformation zugeordnet wird.

Es ist aber auch möglich, CPU Instruktionen der Anwendung (kann auch Binary genannt werden) eine Gültigkeitsinformation zuzuordnen, um beispielsweise eine mittlere Sicherheit zu erreichen.

Generell ist es beispielsweise möglich, dass die Gültigkeitsinformation direkt in die Ausführungsumgebung integriert wird, indem hierfür ein spezieller Speicher bzw. Speicherbeich vorgesehen ist. Die Gültigkeitsinformation kann aber auch außerhalb der Ausführungsumgebung, beispielsweise als Datei, die vorzugsweise kryptographisch geschützt ist, abgelegt sein. Die Ausführungsumgebung greift dann zu Laufzeit des Programms auf die Gültigkeitsinformationen in der Datei zu. Hierzu kann es notwendig sein, dass die Ausführungsumgebung ggf. über die entsprechenden kryptographischen Schlüssel verfügt.

Bei weiteren Ausführungsformen des Verfahrens werden durch einen Trigger die erste Gültigkeitsinformation und/oder die zweite Gültigkeitsinformation und/oder die dritte Gültigkeitsinformation der Programmbefehle gelöscht.

In Situationen in denen beispielsweise ein Steuergerät zur Überwachung von Hochspannung eines ersten Spannungsbereiches eingesetzt wurde und jetzt für die Überwachung von Hochspannung eines zweiten Spannungsbereiches eingesetzt werden soll, ist es sinnvoll, dass die nicht mehr benötigten Funktionen (oder deren Programmbefehle) zur Überwachung des ersten Spannungsbereiches keine Gültigkeitsinformation mehr aufweisen. Durch den Trigger der vorzugsweise durch einen Sicherheitsmechanismus, beispielsweise einem Passwort oder einem kryptographischen Verfahren, geschützt ist, kann ggf. die Gültigkeitsinformation einfach gelöscht werden.

Bei weiteren Ausführungsformen des Verfahrens werden die erste Gültigkeitsinformation und/oder die zweite Gültigkeitsinformation und/oder die dritte Gültigkeitsinformation sicherheitsgeschützt gespeichert.

Die Gültigkeitsinformationen können beispielsweise sicherheitsgeschützt gespeichert werden, indem kryptographische Verfahren wie eine symmetrische Verschlüsslung, asymmetrische Verschlüsslung oder eine digitale Signatur über die Gültigkeitsinformationen gebildet wird, damit deren Integrität überprüfbar ist. Auch kann ein sicherheitsgeschütztes Speichern dadurch erreicht werden, dass das Gerät, beispielsweise ein Steuergerät zur Überwachung von Hochspannung, auf dem die Anwendung ausgeführt wird, versiegelbar ist, sodass ein Speichermodul auf denen die Gültigkeitsinformationen abgelegt sind, auch räumlich nicht erreichbar (räumlich gesichert) ist. Dies hat den Vorteil, dass die Sicherheit des Verfahrens nochmals erhöht wird.

Bei weiteren Ausführungsformen des Verfahrens ist das Einschalten des Lernmodus durch einen Sicherheitsmechanismus geschützt ist.

Dadurch, dass das Einschalten des Lernmodus oder auch des Arbeitsmodus durch einen Sicherheitsmechanismus geschützt ist, wird eine höhere Sicherheit des Verfahrens erreicht. Der Sicherheitsmodus kann beispielsweise mittels kryptographischer Verfahren realisiert werden, oder das Einschalten des Lernmodus ist nur zu vordefinierten Zeitpunkten und/oder Situationen möglich. Dies kann beispielsweise während der Fertigung eines Gerätes sein, auf dem die Anwendung ausgeführt wird. Hier besteht beispielsweise ein Zugriff auf eine versiegelbare Speichereinheit, die während eines regulären Betriebes (im Arbeitsmodus insbesondere am Einsatzort des Gerätes) nicht zugreifbar ist. Ein vordefinierter Zeitpunkt kann beispielsweise auch eine Phase für Systemtests oder beim Debugging der Anwendung auf dem Gerät sein.

Bei weiteren Ausführungsformen des Verfahrens werden die erste Gültigkeitsinformation und/oder die zweite Gültigkeitsinformation und/oder die dritte Gültigkeitsinformation einem weiteren Gerät bereitgestellt.

Hierdurch können auf möglichst einfache Weise die Gültigkeitsinformationen für Anwendungen mit dem gleichen Anwendungsszenario übertragen werden. Werden in einer Kraftwerksanlage mehrere Geräte mit der Anwendung verwendet, um beispielsweise an verschiedenen Stellen auf die identische Weise Spannungsspitzen bei Hochspannung zu überwachen, kann zunächst die Gültigkeitsinformation für die Programmbefehle für ein Gerät und deren Anwendung erfasst werden und die Gültigkeitsinformation beispielsweise an die anderen Geräte übertragen werden. Für die Übertragung können die Gültigkeitsinformationen wiederum kryptographisch geschützt sein und die Übertragung könnte vorzugsweise automatisiert durchgeführt werden.

Bei weiteren Ausführungsformen des Verfahrens wird das Ausführen der Anwendung in der Ausführungsumgebung während dem eingeschalteten Lernmodus auf einem Gerät und/oder auf einem baugleichen Testgerät und/oder einer Simulationsumgebung des Gerätes durchgeführt.

Hierdurch lassen sich die Gültigkeitsinformationen auf möglichst einfache Weise erfassen.

Bei weiteren Ausführungsformen des Verfahrens werden die erste Gültigkeitsinformation und/oder die zweite Gültigkeitsinformation und/oder die dritte Gültigkeitsinformation den Programmbefehlen instruktionsweise und/oder subroutinenweise und/oder bibliotheksweise zugeordnet.

Dadurch, dass die Gültigkeitsinformation derart flexibel zugeordnet werden kann, wird die Gültigkeitsinformation beispielsweise nicht jeder einzelnen Zeile im Programmcode der Anwendung zugeordnet, sondern es kann situationsbedingt auch einer Subroutine/Funktion oder einer Programmbibliothek eine Gültigkeitsinformation zugeordnet werden. Dies hat den Vorteil, dass beispielsweise die Ausführungszeit der Anwendung verbessert wird, da nicht für jede Programmzeile eine Gültigkeitsinformation ausgewertet werden muss.

Bei weiteren Ausführungsformen des Verfahrens wird Programmbefehlen, die von den Programmbefehlen mit der ersten Gültigkeitsinformation und/oder der zweiten Gültigkeitsinformation und/oder der dritten Gültigkeitsinformation abhängen, eine entsprechende Gültigkeitsinformation zugeordnet.

Hierdurch können beispielsweise durch den Programmierer der Anwendung bereits Gültigkeitsinformationen zugeordnet werden. Dies hat insbesondere den Vorteil, dass die Dauer des Lernmodus zum Zuordnen aller notwendigen Gültigkeitsinformationen für ein Anwendungsszenario verkürzt werden kann.

Bei weiteren Ausführungsformen des Verfahrens wird beim Ausführen von gültigkeitsinformationslosen Programmbefehlen eine Signalisierungsinformation bereitgestellt.

Hierdurch kann vorzugsweise erkannt werden, wenn Programmbefehle ausgeführt werden, die eigentlich für das Anwendungsszenario nicht notwendig sind. Die Signalisierungsinformation kann beispielsweise an eine Steuerkonsole oder eine Sicherheitsüberwachungssystem übermittelt werden, sodass Techniker beispielsweise in einer Kraftwerksanlage, die Anwendung und das Gerät auf dem die Anwendung installiert ist, überprüfen. Dadurch ist es vorzugsweise möglich, Manipulationen der Anwendung bzw. des Gerätes oder der Arbeitsumgebung des Gerätes zu erkennen. Diese Signalisierungsinformation kann beispielsweise durch eine Unterbrechung oder eine Ausnahme erzeugt werden, die bei gültigkeitsinformationslosen Programmbefehlen hinterlegt ist.

Bei weiteren Ausführungsformen des Verfahrens werden beim Einschalten des Arbeitsmodus gültigkeitsinformationslose Programmbefehle aus der Anwendung entfernt.

Hierdurch wird die Sicherheit der Anwendung erhöht, da unnötige Programmbefehle oder auch Programmcodes aus der Anwendung entfernt werden. Dadurch hat ein Angreifer keine Möglichkeit, Programmteile zu nutzen, die für das Anwendungsszenario ungenutzt sind.

Gemäß einem weiteren Aspekt betrifft die Erfindung eine Ausführungsumgebung zum gesicherten rechnergestützten Ausführen von Programmbefehlen einer Anwendung. Die Ausführungsumgebung umfasst ein erstes Schaltmodul zum Einschalten eines Lernmodus der Ausführungsumgebung. Die Ausführungsumgebung umfasst zusätzlich ein Ausführungsmodul zum Ausführen der Anwendung in der Ausführungsumgebung während der Lernmodus eingeschaltet ist, wobei Programmbefehle der Anwendung für ein ausgewähltes vorgegebenes Anwendungsszenario durchlaufen werden und die Ausführungsumgebung eine erste anwendungsszenariospezifische Gültigkeitsinformation den durchlaufenen Programmbefehlen zuordnet. Die Ausführungsumgebung umfasst zusätzlich ein zweites Schaltmodul zum Einschalten eines Arbeitsmodus der Ausführungsumgebung, wobei im Arbeitsmodus die Ausführungsumgebung die erste Gültigkeitsinformation der Programmbefehle überprüft, und wobei die Ausführungsumgebung die Programmbefehle abhängig von ihrer Gültigkeitsinformation ausführt.

Das erste Schaltmodul und das zweite Schaltmodul können beispielsweise als integrales Schaltmodul ausgestaltet sein, das es erlaubt, jeweils den Lernmodus oder den Arbeitsmodus einzuschalten.

Bei einer ersten Ausführungsform der Ausführungsumgebung ist die Ausführungsumgebung ein Prozessor oder eine virtuelle Maschine, ein Betriebssystemkern oder ein Betriebssystemkern unter Verwendung einer Speicherverwaltungseinheit.

Gemäß einem weiteren Aspekt betrifft die Erfindung ein System, dass eine erfindungsgemäße Ausführungsumgebung aufweist.

Des Weiteren wird ein Computerprogrammprodukt mit Programmbefehlen zur Durchführung des genannten erfindungsgemäßen Verfahrens beansprucht.

Zusätzlich wird eine Variante des Computerprogrammproduktes mit Programmbefehlen zur Konfiguration eines Erstellungsgeräts, beispielsweise ein 3D-Drucker oder ein ähnliches Gerät, beansprucht, wobei das Erstellungsgerät mit den Programmbefehlen derart konfiguriert wird, dass die genannte erfindungsgemäße Ausführungsumgebung erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in einem System eingelesen und führt die Programmbefehle aus, sodass das erfindungsgemäße Verfahren auf einem Computer zur Ausführung gebracht wird oder das Erstellungsgerät derart konfiguriert, dass dieses die erfindungsgemäße Ausführungsumgebung erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein Ablaufdiagramm eines ersten Ausführungsbeispiels des offenbarten Verfahrens;
- Fig. 2: veranschaulicht ein zweites Ausführungsbeispiel des offenbarten Verfahrens;
- Fig. 3: veranschaulicht ein drittes Ausführungsbeispiel des offenbarten Verfahrens;
- Fig. 4: eine Ausführungsumgebung eines vierten Ausführungsbeispiels; und
- Fig. 5: ein System mit einer Ausführungsumgebung.

In den Figuren sind funktionsgleiche Elemente mit denselben Bezugszeichen versehen, sofern nichts anderes angegeben ist.

Die nachfolgenden Erläuterungen beziehen sich dabei auf sämtliche Ausführungsbeispiele.

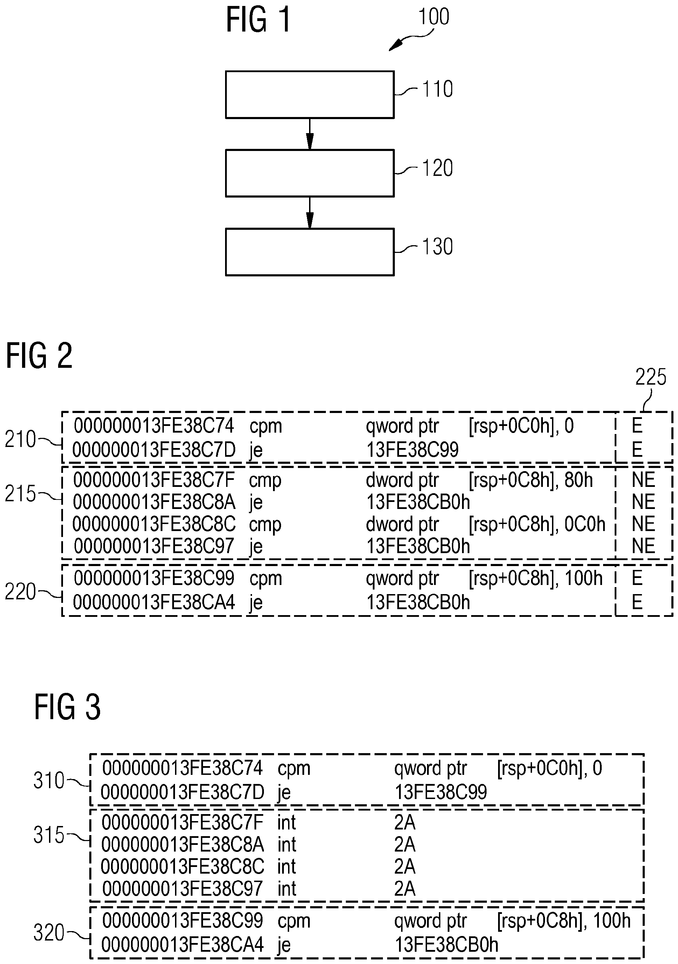

Fig. 1 zeigt ein Ablaufdiagramm eines ersten Ausführungsbeispiels des offenbarten Verfahrens 100. Das Verfahren 100 ist zum gesicherten Ausführen von Programmbefehlen einer Anwendung auf einem Rechner oder einem Gerät, beispielsweise ein Steuergerät für ein Feuerlöschsystem, ein Überwachungsgerät zur Überwachung von Spannungsspitzen bei Hochspannung oder ein Feldgerät, geeignet.

Das Verfahren 100 weist dazu einen ersten Verfahrensschritt zum Einschalten 110 eines Lernmodus einer Ausführungsumgebung auf. Die Ausführungsumgebung dient insbesondere zum Ausführen der Anwendung und es kann sich dabei um einen Prozessor, einen Betriebssystemlinker, einem Programmlinker oder einen virtuellen Prozessor oder eine virtuelle Maschine, wie beispielsweise die Java Virtual Machine handeln. Das Einschalten des Lernmodus ist beispielsweise mit einem Sicherheitsmechanismus wie eine Passworteingabe oder kryptographisch geschützten Nutzerauthentifizierung geschützt.

Das Verfahren 100 umfasst zusätzlich einen zweiten Verfahrensschritt zum Ausführen 120 der Anwendung in der Ausführungsumgebung während der Lernmodus eingeschaltet ist, wobei Programmbefehle der Anwendung für ein ausgewähltes vorgegebenes Anwendungsszenario durchlaufen werden und die die Ausführungsumgebung eine erste anwendungsszenariospezifische Gültigkeitsinformation den durchlaufenen Programmbefehlen zuordnet. Hierzu kann beispielsweise eine Datenstruktur verwendet werden, die zu jedem durchlaufenen Programmbefehl eine Gültigkeitsinformation speichert. Nicht-durchlaufenen Programmbefehlen kann beispielsweise eine Ungültigkeitsinformation insbesondere in Form eines auf Null gesetzten Datenblocks, einer Ausnahme (engl. Exception) oder einer Unterbrechung (engl. Interrupt) zugeordnet werden. Die Datenstruktur kann zunächst als Initialwert nur Ungültigkeitsinformationen enthalten und diese werden dann während der Lernphase teilweise oder ganz mit Gültigkeitsinformationen überschrieben.

In einer Variante wird die Ungültigkeitsinformation dadurch bestimmt, dass keine Gültigkeitsinformation zu einem Programmbefehl vorhanden ist.

Das Verfahren 100 umfasst zusätzlich einen dritten Verfahrensschritt zum Einschalten 130 eines Arbeitsmodus der Ausführungsumgebung, wobei im Arbeitsmodus die Ausführungsumgebung die erste Gültigkeitsinformation der Programmbefehle überprüft, und wobei die Ausführungsumgebung die Programmbefehle abhängig von ihrer Gültigkeitsinformation ausführt. Soll während des Arbeitsmodus dennoch irrtümlicherweise ein Programmbefehl mit einer Ungültigkeitsinformation ausgeführt werden, kann beispielsweise die zugeordnete Ausnahme geworfen werden und insbesondere mit einer Signalisierungsinformation vorzugsweise ein Administrator informiert werden. Mit der Signalisierungsinformation kann aber auch die Anwendung, die Ausführungsumgebung oder das Gerät auf dem die Anwendung ausgeführt wird, in einen gesicherten Zustand gebracht werden. Der entsprechende Programmbefehl mit der Ungültigkeitsinformation wird dann vorzugsweise nicht ausgeführt.

Das Einschalten des Arbeitsmodus ist beispielsweise mit einem Sicherheitsmechanismus, wie eine Passworteingabe oder eine kryptographisch geschützten Nutzerauthentifizierung, geschützt.

Durch das offenbarte Verfahren 100 ist es möglich ungenutzte Funktionalitäten einer Anwendung, beispielsweise einer Bibliothek oder einer Applikation im operativen Betrieb, unerreichbar zu machen.

Die Identifikation ungenutzter Programmbefehle oder Codeteile erfolgt dabei möglichst automatisch und transparent für den Anwender. Es können hierzu beispielsweise Auswertungen bereitgestellt werden, die angeben welchen Programmbefehlen Gültigkeitsinformationen zugeordnet wurden, und welchen Ungültigkeitsinformationen zugeordnet wurden.

Beispielsweise kann ein Entwickler nach Begutachtung der Auswertung noch manuell Gültigkeitsinformationen einzelnen Programmbefehlen zuweisen, falls dies im Rahmen von bestimmten Eingabedaten für die Anwendung notwendig ist.

Mit anderen Worten, protokolliert die Ausführungsumgebung im Lernmodus die Programmbefehle aller durchlaufenen/erreichten Ausführungspfade mit. Dies ist beispielsweise in einem zweiten Ausführungsbeispiel in Fig. 2 veranschaulicht. Dabei zeigt Fig. 2 einen ersten Block von Programmbefehlen 210, denen jeweils eine Gültigkeitsinformation E zugeordnet ist, einen zweiten Block von Programmbefehlen 215, denen jeweils eine Ungültigkeitsinformation NE zugeordnet ist, und einen dritten Block von Programmbefehlen 220, denen jeweils eine Gültigkeitsinformation E zugeordnet ist.

Während dem Lernmodus müssen vorzugsweise alle gültigen Zustände, also alle Zustände, welche die Anwendung für das ausgewählte vorgegebene Anwendungsszenario annehmen kann, durchlaufen werden.

Der Lernmodus kann beispielsweise zu unterschiedlichen Zeitpunkten erfolgen:
Es kann beispielsweise eine Lernphase für ein Anwendungsszenario erfolgen, beispielsweise bei einer Softwarevalidierung, bei der Abnahme/Zertifizierung für eine Automatisierungsanlage. Dies kann aber auch beim Versiegeln von Konfigurationseinstellungen des Gerätes, beim Laden bzw. Installieren von Programmcode für die Anwendung erfolgen. Diese Information wird zusammen mit dem ausgeführten Programmcode der Anwendung abgelegt. Die Daten 225, also die Gültigkeitsinformation E und/oder die Ungültigkeitsinformation NE, können direkt im Programmcode, beispielsweise als Flag im Opcode, als Flag an Einsprungstellen (Funktionen) einer Programmbibliothek abgelegt werden, dass auch als Annotieren von Objektcode oder annotieren von Binärcode bezeichnet wird. Alternativ können diese Daten als separate Metadaten abgelegt werden.

In einer anderen Variante wird der Code modifiziert. So können z.B. nicht markierte Opcodes, also gültigkeitsinformationslose Programmbefehle 215, durch NOPs, TRAPs oder Ausnahmen ersetzt werden.

Es können aber auch mehrere Lernphasen zum Zuordnen der Gültigkeitsinformationen 225 genutzt werden:
Hierzu kann der Lernmodus während einer ersten Lernphase bereits während des Systemtests des Herstellers eines Gerätes eingeschaltet werden, in dem bestimmte oder typische Anwendungsszenarien getestet werden. Hierdurch kann ein Datensatz mit einer Basiskonfiguration mit Gültigkeitsinformationen für die Anwendung erzeugt werden.

Diese vorab erzeugte Basiskonfiguration kann dann beim Anwender durch ein erneutes Einschalten des Lernmodus weiter konfiguriert werden. Hierdurch lässt sich eine zweite Lernphase direkt am Einsatzort, also das ausgewählte vorgegebene Anwendungsszenario, des Gerätes verkürzen.

Diese Basiskonfiguration kann beispielsweise über die Daten aus dem Systemtest erstellt werden, die während einer operativen Lernphase am Einsatzort des Gerätes noch verfeinert werden können. Die gelernten Daten 225 (separate Metadaten oder annotierter Objektcode / Binärcode), also Gültigkeitsinformationen und/oder Ungültigkeitsinformation, können in einer Variante einem anderen Gerät in kryptographisch geschützter Form bereitgestellt werden, beispielsweise als digital signierter Datensatz.

Auch kann der Lernmodus auf unterschiedlichen Geräten eingeschaltet werden bzw. die Lernphasen auf unterschiedlichen Geräten ausgeführt werden:
- Auf dem Zielgerät selbst, also das Gerät das das ausgewählte vorgegebene Anwendungsszenario verwendet werden soll;
- Auf einem baugleichen Testgerät (z.B. nicht operativ im Einsatz für das das ausgewählte vorgegebene Anwendungsszenario);
- In einer Simulationsumgebung des Zielgeräts (Digital Twin);

Bei strenger Interpretation werden während des eingeschalteten Lernmodus vorzugsweise alle mit einem Anwendungsszenario assoziierten Programmteile (also die Programmbefehle der Programmteile), die später ablauffähig sein sollen, tatsächlich durchlaufen.

In einer weiteren Variante ist aber auch ein unscharfes Lernen vorstellbar, d.h. im eingeschalteten Lernmodus wird jeweils in einem erweiterten Bereich einem Programmbefehl eine Gültigkeitsinformation zugeordnet.

Hierzu sind beispielsweise unterschiedliche Abstufungen denkbar:
In der Abstufung "fein" wird jeder verwendeten Instruktion eines Programmbefehls, also auch die Instruktionen der Subroutinen und Programmbibliotheken, eine Gültigkeitsinformation E zugeordnet.

In der Abstufung "mittel" wird den Subroutinen der durchlaufenen Programmbefehle eine Gültigkeitsinformation E zugeordnet. Hier kann beispielsweise auch eine Aufruftiefe von Subroutinen berücksichtigt werden, um insbesondere bei geschachtelten Funktionen den Aufwand für eine Zuordnung der Gültigkeitsinformation E gering zu halten.

In der Abstufung "grob" werden den von der Anwendung verwendeten Programmbibliotheken jeweils eine Gültigkeitsinformation E zugeordnet, um dadurch insbesondere allen Programmbefehlen der Programmbibliothek eine Gültigkeitsinformation zuzuordnen.

Die Granularität Abstufungen könnte beispielsweise auch bei der Codeentwicklung der Anwendung durch geeignete Strukturangaben gesteuert werden. Hierzu könnte ein Entwickler bestimmten Programmbefehlen und davon abhängige Programmbefehle, Instruktionen, Subroutinen oder Programmbibliotheken manuell eine Gültigkeitsinformation zuordnen.

Dies kann beispielsweise auch dadurch realisiert werden, dass die Gültigkeitsinformationen derart berücksichtigt wird, dass Abhängigkeiten berücksichtigt werden können. Wenn beispielsweise ein erster Befehlspfad gültig ist (diesem als eine Gültigkeitsinformation zugewiesen wurde) dann ist automatisch auch ein zweiter abhängiger Befehlspfad ebenfalls gültig. Dabei kann entweder dem zweiten Befehlspfad automatisch ebenfalls eine Gültigkeitsinformation zugewiesen werden oder der zweite Befehlspfad ist beispielsweise durch seine Abhängigkeit gültig. Mit anderen Worten, kann beispielsweise die Gültigkeitsinformation von dem ersten Befehlspfad an den zweiten Befehlspfad aufgrund der Abhängigkeit des zweiten Befehlspfades von dem ersten Befehlspfades vererbt werden.

Im Arbeitsmodus werden von der Ausführungsumgebung vorzugsweise nur Programmbefehle akzeptiert oder ausgeführt, denen eine Gültigkeitsinformation E zugeordnet ist, was auch als zulässig markierter Programmbefehl bezeichnet werden kann. Wird ein gültigkeitsinformationsloser Programmbefehl NE, also ein nicht als zulässig markierter Programmbefehl, angesprungen, führt dies beispielsweise zu einer Ausnahme oder einem anderen Befehl, der hinterlegt wurde. Oder mit andere Worten ausgedrückt, der Befehl, der beispielsweise den nicht zulässigen Programmbefehl überschrieben hat.

Sollte nach dem Zuordnen der Gültigkeitsinformationen 225 ein Gerät durch eine Umkonfiguration oder Anwendung in einem leicht veränderten Anwendungsszenario einen erweiterten oder neuen Satz von Programmbefehlen und/oder Funktionen und/oder Subroutinen und/oder Bibliotheken benötigen, besteht die Möglichkeit, gesteuert durch einen Trigger, wie beispielsweise ein Konfigurationsdatum und/oder einen manueller Trigger in einer Neulernphase, die zugeordneten Gültigkeitsinformationen 225 wieder zu entfernen. Hierzu wird der Lernmodus wieder eingeschaltet und Gültigkeitsinformationen entsprechend der veränderten Anwendungsszenario oder der Umkonfiguration den Programmbefehlen zugeordnet. Hierdurch können die vorher nicht zulässige Programmbefehle (oder gültigkeitsinformationslose Programmbefehle) wieder nutzbar gemacht werden. Sollten Code- Bereich durch NOPs, Traps oder Ausnahmen entfernt worden sein, können diese Codeanteile aus einer Sicherungskopie der unveränderten Anwendung oder deren Programmbibliotheken zurückgespielt werden.

In einer weiteren Variante wird das Verfahren direkt in Hardware realisiert. Hierbei verfügt ein Prozessor, der die Arbeitsumgebung darstellt, beispielsweise eine CPU, über einen ersten Modus, den Lernmodus, und einen zweiten Modus, den Arbeitsmodus. Im ersten Modus werden die durchlaufenen Opcodes, also die durchlaufenen Programmbefehle markiert, also eine Gültigkeitsinformation zugewiesen, und im Programmimage abgelegt. Nach Umschalten in den Arbeitsmodus werden nur noch die markierten Befehle einer Anwendung akzeptiert.

In einer weiteren Variante wird das Verfahren mittels einer Arbeitsumgebung in Form einer virtuellen Maschine realisiert. Die virtuelle Maschine zeichnet in einem Lernmodus die abgearbeiteten Codezeilen einer Anwendung, also die durchlaufenen Programmbefehle der Anwendung, auf und erzeugt eine Protokolldatei, welche die den Programmbefehlen zugeordneten Gültigkeitsinformationen enthält. Die Zuordnung der Gültigkeitsinformation kann direkt beim Erzeugen eines Eintrags in die Protokolldatei erfolgen.

Während einer späteren Ausführung der Anwendung prüft die virtuelle Maschine in einem Arbeitsmodus unter Verwendung der Protokolldatei, ob ein Programmbefehl ausgeführt werden darf. Die Integrität/Authentizität der Protokolldatei kann beispielsweise durch eine digitale Signatur gesichert sein, die von der virtuellen Maschine überprüft wird.

Fig. 3 veranschaulicht ein drittes Ausführungsbeispiel des offenbarten Verfahrens. In diesem Ausführungsbeispiel wird das Verfahren mittels eines Betriebssystemkerns realisiert. Die Anwendung wird im Lernmodus vom Betriebssystemkern in einer kontrollierten Umgebung, beispielsweise einem Debugger, gestartet. Die durchlaufenen Programmbefehle 310, 320 werden erfasst, in dem diesen eine Gültigkeitsinformation zugeordnet wird. Die Programmbefehle und die Gültigkeitsinformation kann dann gespeichert werden. Im Arbeitsmodus nutzt der Runtime-Loader diese Gültigkeitsinformationen um den Programmcode, also die Programmbefehle der Anwendung, zu instrumentieren.

Beispielsweise können alle nicht durchlaufenen Codezeilen, also die gültigkeitsinformationslosen Programmbefehle, durch Traps ersetzt werden.

In einer weiteren Variante wird das Verfahren mittels eines Betriebssystemkerns unter Verwendung der Speicherverwaltungseinheit, auch Memory Management Unit genannt MMU, realisiert.

Eine Anwendung wird im Lernmodus vom Betriebssystemkern in einer kontrollierten Umgebung, beispielsweise einem Debugger, gestartet. Die durchlaufenen Programmbefehle werden erfasst, in dem diesen jeweils eine Gültigkeitsinformation zugeordnet wird. Die Programmbefehle und die Gültigkeitsinformation kann dann gespeichert werden.

Den Programmbefehlen denen keine Gültigkeitsinformation zugeordnet werden, also gültigkeitsinformationslose Programmbefehle - auch nicht markierte Code-Teile genannt, werden durch die Speicherverwaltungseinheit als nicht ausführbar oder als nicht lesbar gekennzeichnet. Bei Zugriff (Laden der Programmbefehle aus externem Speicher in Cache) wird vorzugsweise durch die Speicherverwaltungseinheit eine Trap oder eine Unterbrechung (engl. Interrupt) ausgelöst.

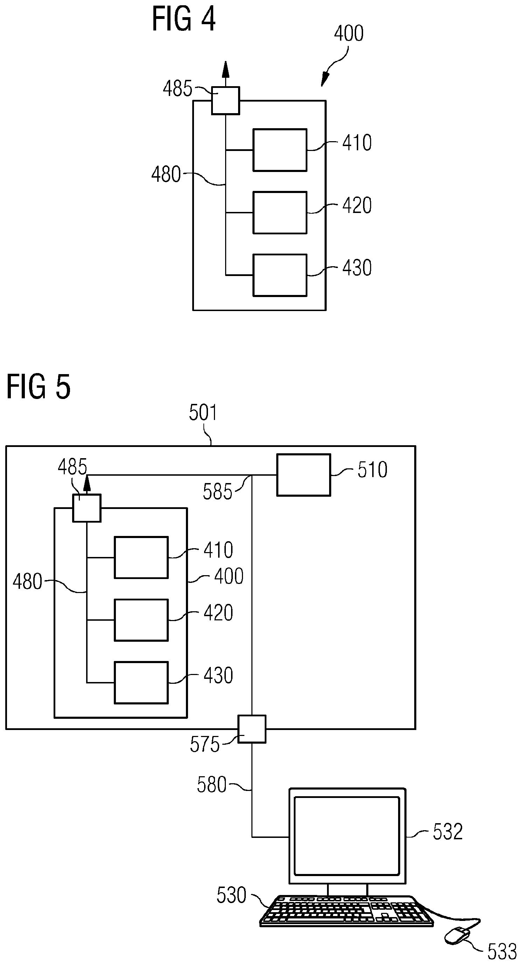

Fig. 4 zeigt eine Ausführungsumgebung 400 eines vierten Ausführungsbeispiels zum gesicherten rechnergestützten Ausführen von Programmbefehlen einer Anwendung. Die Ausführungsumgebung 400 umfasst ein erstes Schaltmodul 410, ein Ausführungsmodul 420, ein zweites Schaltmodul 430 und eine Schnittstelle 485, die über einen ersten Bus 480 kommunikativ miteinander verbunden sind.

Das erste Schaltmodul 410 schaltet einen Lernmodus der Ausführungsumgebung 400 ein.

Das Ausführungsmodul 420 führt die Anwendung in der Ausführungsumgebung 400 aus, während der Lernmodus eingeschaltet ist, wobei Programmbefehle der Anwendung für ein ausgewähltes vorgegebenes Anwendungsszenario durchlaufen werden und die Ausführungsumgebung 400 eine erste anwendungsszenariospezifische Gültigkeitsinformation den durchlaufenen Programmbefehlen zuordnet.

Das zweite Schaltmodul 430 schaltet einen Arbeitsmodus der Ausführungsumgebung 400 ein, wobei im Arbeitsmodus die Ausführungsumgebung 400 die erste Gültigkeitsinformation der Programmbefehle überprüft, und wobei die Ausführungsumgebung die Programmbefehle abhängig von ihrer Gültigkeitsinformation ausführt.

Die Ausführungsumgebung kann beispielsweise als Prozessor oder als virtuelle Maschine auf einem Chip, insbesondere in Form von embedded Java, in einem Gerät, beispielsweise ein Feldgeräte, ein Steuerungsgerät oder ein Messgerät, verbaut sein. Das Gerät kann Teil eines Systems sein, wobei das Gerät über einen Datenbus mit einer Workstation eines Operators verbunden ist.

Ein solches System wird beispielsweise in Fig. 5 als fünftes Ausführungsbeispiel gezeigt. Im Einzelnen zeigt Fig. 5 ein System, beispielsweise ein Überwachungssystem für Hochspannung in einer Kraftwerksanlage.

Eine Workstation, beispielsweise ein IBM-kompatibles Computersystem, umfassend ein Anzeigegerät 532, beispielsweise einen Bildschirm, und mehrere Eingabegeräte, beispielsweise eine Computermaus 533 und eine Tastatur 530, ist über einen dritten Bus 580 und einer zweiten Schnittstelle 575 eines Gerät 501 mit dem Gerät 501 kommunikativ verbunden. Der dritte Bus 580 kann beispielsweise ein Ethernetbus oder ein Universal Serial Bus (USB) sein.

Das Gerät 501 umfasst eine Ausführungsumgebung 400 zum gesicherten rechnergestützten Ausführen von Programmbefehlen einer Anwendung in ausgewählten vorgegebenen Anwendungsszenario, beispielsweise eine Hochspannungsüberwachung mit den zugehörigen Messverfahren. Im Gerät 501 ist beispielsweise über einen zweiten Bus 585 die Ausführungsumgebung mittels der Schnittstelle 485, mit einem Erfassungsgerät 510, beispielsweise einem Spannungsmesssensor, und der zweiten Schnittstelle 575 verbunden.

Wird beispielsweise während der Überwachung von Hochspannung bzw. von Spannungsspitzen ein Programmbefehl ausgeführt, dem keine Gültigkeitsinformation zugeordnet ist, so kann die Ausführungsumgebung eine Ausnahme werfen, die einem Operator auf der Workstation dann angezeigt wird. Der Operator kann dann ggf. Überprüfungen durchführen, ob es sich um ein zufälliges Fehlverhalten der Anwendung gehalten hat oder ob eine Manipulation der Anwendung durch einen unbefugten Dritten stattgefunden hat.

## Patentansprüche

1. Verfahren (100) zum gesicherten rechnergestützten Ausführen von Programmbefehlen einer Anwendung mit den folgenden Verfahrensschritten:
- Einschalten (110) eines Lernmodus einer Ausführungsumgebung (400);
- Ausführen (120) der Anwendung in der Ausführungsumgebung (400) während der Lernmodus eingeschaltet ist, wobei
- Programmbefehle der Anwendung für ein ausgewähltes vorgegebenes Anwendungsszenario durchlaufen werden;
- die Ausführungsumgebung (400) eine erste anwendungsszenariospezifische Gültigkeitsinformation den durchlaufenen Programmbefehlen (210, 220, 310, 320) zuordnet;
- Einschalten (130) eines Arbeitsmodus der Ausführungsumgebung (400), wobei im Arbeitsmodus die Ausführungsumgebung (400) die erste Gültigkeitsinformation der Programmbefehle überprüft, und wobei die Ausführungsumgebung (400) die Programmbefehle abhängig von ihrer Gültigkeitsinformation ausführt.

2. Verfahren (100) nach Anspruch 1, wobei die durchlaufenen Programmbefehle (210, 220, 310, 320) durchlaufenen Ausführungspfaden der Anwendung zugeordnet werden und eine zweite anwendungsszenariospezifische Gültigkeitsinformation jeweils einem Ausführungspfad zugeordnet wird.

3. Verfahren (100) nach Anspruch 1 oder 2, wobei
- die erste Gültigkeitsinformation während einer ersten Lernphase zugeordnet wird;
- während einer zweiten Lernphase die Ausführungsumgebung (400) eine dritte anwendungsszenariospezifische Gültigkeitsinformation den durchlaufenen Programmbefehlen (210, 220, 310, 320) zuordnet.

4. Verfahren (100) nach einem der vorhergehenden Ansprüche, wobei als Ausführungsumgebung (400) ein Prozessor und/oder eine virtuelle Maschine und/oder ein Betriebssystemkern oder ein Betriebssystemkern unter Verwendung einer Speicherverwaltungseinheit verwendet wird.

5. Verfahren (100) nach einem der vorhergehenden Ansprüche, wobei durch einen Trigger die erste Gültigkeitsinformation und/oder die zweite Gültigkeitsinformation und/oder die dritte Gültigkeitsinformation der Programmbefehle gelöscht werden.

6. Verfahren (100) nach einem der vorhergehenden Ansprüche, wobei die erste Gültigkeitsinformation und/oder die zweite Gültigkeitsinformation und/oder die dritte Gültigkeitsinformation sicherheitsgeschützt gespeichert werden.

7. Verfahren (100) nach einem der vorhergehenden Ansprüche, wobei das Einschalten des Lernmodus durch einen Sicherheitsmechanismus geschützt ist.

8. Verfahren (100) nach einem der vorhergehenden Ansprüche, wobei die erste Gültigkeitsinformation und/oder die zweite Gültigkeitsinformation und/oder die dritte Gültigkeitsinformation einem weiteren Gerät bereitgestellt werden.

9. Verfahren (100) nach einem der vorhergehenden Ansprüche, wobei das Ausführen (120) der Anwendung in der Ausführungsumgebung (400) während dem eingeschalteten Lernmodus auf einem Gerät und/oder auf einem baugleichen Testgerät und/oder einer Simulationsumgebung des Gerätes durchgeführt wird.

10. Verfahren (100) nach einem der vorhergehenden Ansprüche, wobei die erste Gültigkeitsinformation und/oder die zweite Gültigkeitsinformation und/oder die dritte Gültigkeitsinformation den Programmbefehlen instruktionsweise und/oder subroutinenweise und/oder bibliotheksweise zugeordnet werden.

11. Verfahren (100) nach einem der vorhergehenden Ansprüche, wobei Programmbefehle, die von den Programmbefehlen mit der ersten Gültigkeitsinformation und/oder der zweiten Gültigkeitsinformation und/oder der dritten Gültigkeitsinformation abhängen, eine entsprechende Gültigkeitsinformation zugeordnet wird.

12. Verfahren (100) nach einem der vorhergehenden Ansprüche, wobei beim Ausführen von gültigkeitsinformationslosen Programmbefehlen eine Signalisierungsinformation bereitgestellt wird.

13. Verfahren (100) nach einem der Ansprüche 1 bis 11, wobei beim Einschalten des Arbeitsmodus gültigkeitsinformationslose Programmbefehle aus der Anwendung entfernt werden.

14. Ausführungsumgebung (400) zum gesicherten rechnergestützten Ausführen von Programmbefehlen einer Anwendung, aufweisend:
- ein erstes Schaltmodul (410) zum Einschalten eines Lernmodus der Ausführungsumgebung (400);
- ein Ausführungsmodul (420) zum Ausführen der Anwendung in der Ausführungsumgebung (400) während der Lernmodus eingeschaltet ist, wobei
- Programmbefehle der Anwendung für ein ausgewähltes vorgegebenes Anwendungsszenario durchlaufen werden;
- die Ausführungsumgebung (400) eine erste anwendungsszenariospezifische Gültigkeitsinformation den durchlaufenen Programmbefehlen (210, 220, 310, 320) zuordnet;
- ein zweites Schaltmodul (430) zum Einschalten (130) eines Arbeitsmodus der Ausführungsumgebung (400), wobei im Arbeitsmodus die Ausführungsumgebung (400) die erste Gültigkeitsinformation der Programmbefehle überprüft, und wobei die Ausführungsumgebung (400) die Programmbefehle abhängig von ihrer Gültigkeitsinformation ausführt.

15. Ausführungsumgebung (400) nach Anspruch 14, wobei die Ausführungsumgebung (400) ein Prozessor oder eine virtuelle Maschine oder ein Betriebssystemkern oder ein Betriebssystemkern unter Verwendung einer Speicherverwaltungseinheit ist.

16. System mit einer Ausführungsumgebung (400) nach einem der Ansprüche 14-15.

17. Computerprogrammprodukt mit Programmbefehlen zur Durchführung des Verfahrens nach einem der Ansprüche 1-13.

18. Computerprogrammprodukt mit Programmbefehlen für ein Erstellungsgerät, das mittels der Programmbefehle konfiguriert wird, die Ausführungsumgebung (400) nach einem der Ansprüche 14-15 zu erstellen.

19. Bereitstellungsvorrichtung für das Computerprogrammprodukt nach Anspruch 17 oder 18, wobei die Bereitstellungsvorrichtung das Computerprogrammprodukt speichert und/oder bereitstellt.

## Claims

1. Method (100) for the secure computer-aided execution of program instructions of an application having the following method steps:
- switching on (110) a learning mode of an execution environment (400);
- executing (120) the application in the execution environment (400) while the learning mode is switched on, wherein
- program instructions of the application are performed for a selected prescribed application scenario;
- the execution environment (400) assigns a first piece of application-scenario-specific validity information to the performed program instructions (210, 220, 310, 320) ;
- switching on (130) a working mode of the execution environment (400), wherein in the working mode the execution environment (400) checks the first piece of validity information of the program instructions, and wherein the execution environment (400) executes the program instructions on the basis of their validity information.

2. Method (100) according to Claim 1, wherein the performed program instructions (210, 220, 310, 320) are assigned to followed execution paths of the application and a second piece of application-scenario-specific validity information is respectively assigned to an execution path.

3. Method (100) according to Claim 1 or 2, wherein
- the first piece of validity information is assigned during a first learning phase;
- during a second learning phase the execution environment (400) assigns a third piece of application-scenario-specific validity information to the performed program instructions (210, 220, 310, 320).

4. Method (100) according to one of the preceding claims, wherein the execution environment (400) used is a processor and/or a virtual machine and/or an operating system core or an operating system core using a memory management unit.

5. Method (100) according to one of the preceding claims, wherein a trigger erases the first piece of validity information and/or the second piece of validity information and/or the third piece of validity information of the program instructions.

6. Method (100) according to one of the preceding claims, wherein the first piece of validity information and/or the second piece of validity information and/or the third piece of validity information are stored in a security-protected manner.

7. Method (100) according to one of the preceding claims, wherein the switching-on of the learning mode is protected by a security mechanism.

8. Method (100) according to one of the preceding claims, wherein the first piece of validity information and/or the second piece of validity information and/or the third piece of validity information are provided to a further device.

9. Method (100) according to one of the preceding claims, wherein the execution (120) of the application in the execution environment (400) during the switched-on learning mode is performed on a device and/or on a test device of identical design and/or on a simulation environment of the device.

10. Method (100) according to one of the preceding claims, wherein the first piece of validity information and/or the second piece of validity information and/or the third piece of validity information are assigned to the program instructions on an instruction-by-instruction basis and/or on a subroutine-by-subroutine basis and/or on a library-by-library basis.

11. Method (100) according to one of the preceding claims, wherein program instructions that are dependent on the program instructions having the first piece of validity information and/or the second piece of validity information and/or the third piece of validity information are assigned an applicable piece of validity information.

12. Method (100) according to one of the preceding claims, wherein the execution of program instructions without validity information involves a piece of signaling information being provided.

13. Method (100) according to one of Claims 1 to 11, wherein the switching-on of the working mode involves program instructions without validity information being removed from the application.

14. Execution environment (400) for the secure computer-aided execution of program instructions of an application, having:
- a first switching module (410) for switching on a learning mode of the execution environment (400);
- an execution module (420) for executing the application in the execution environment (400) while the learning mode is switched on, wherein
- program instructions of the application are performed for a selected prescribed application scenario;
- the execution environment (400) assigns a first piece of application-scenario-specific validity information to the performed program instructions (210, 220, 310, 320) ;
- a second switching module (430) for switching on (130) a working mode of the execution environment (400), wherein in the working mode the execution environment (400) checks the first piece of validity information of the program instructions, and wherein the execution environment (400) executes the program instructions on the basis of their validity information.

15. Execution environment (400) according to Claim 14, wherein the execution environment (400) is a processor or a virtual machine or an operating system core or an operating system core using a memory management unit.

16. System having an execution environment (400) according to either of Claims 14-15.

17. Computer program product having program instructions for performing the method according to one of Claims 1-13.

18. Computer program product having program instructions for a creation device that is configured by means of the program instructions to create the execution environment (400) according to either of Claims 14-15.

19. Provision apparatus for the computer program product according to Claim 17 or 18, wherein the provision apparatus stores and/or provides the computer program product.

## Revendications

1. Procédé (100) pour exécuter des instructions de programme d'une application de façon sécurisée et assistée par ordinateur, comportant les étapes suivantes :
- enclenchement (110) d'un mode d'apprentissage d'un environnement d'exécution (400) ;
- exécution (120) de l'application dans l'environnement d'exécution (400) pendant que le mode d'apprentissage est enclenché,
▪ des instructions de programme de l'application étant exécutées pour un scénario d'application donné et choisi ;
▪ l'environnement d'exécution (400) associant aux instructions de programme exécutées (210, 220, 310, 320) une première information de validité spécifique au scénario d'application ;
- enclenchement (130) d'un mode de travail de l'environnement d'exécution (400), l'environnement d'exécution (400), dans le mode de travail, vérifiant la première information de validité des instructions de programme et l'environnement d'exécution (400) exécutant les instructions de programme en fonction de leur information de validité.

2. Procédé (100) selon la revendication 1, les instructions de programme exécutées (210, 220, 310, 320) étant associées à des chemins d'exécution parcourus de l'application et une deuxième information de validité spécifique au scénario d'application étant respectivement associée à un chemin d'exécution.

3. Procédé (100) selon la revendication 1 ou 2,
- la première information de validité étant associée pendant une première phase d'apprentissage ;
- pendant une deuxième phase d'apprentissage, l'environnement d'exécution (400) affectant aux instructions de programme exécutées (210, 220, 310, 320) une troisième information de validité spécifique au scénario d'application.

4. Procédé (100) selon l'une des revendications précédentes, en tant qu'environnement d'exécution (400) étant utilisés un processeur et/ou une machine virtuelle et/ou un noyau de système d'exploitation avec utilisation d'une unité de gestion de mémoire.

5. Procédé (100) selon l'une des revendications précédentes, la première information de validité et/ou la deuxième information de validité et/ou la troisième information de validité des instructions de programme étant effacées par un déclencheur.

6. Procédé (100) selon l'une des revendications précédentes, la première information de validité et/ou la deuxième information de validité et/ou la troisième information de validité étant sauvegardées de manière sécurisée.

7. Procédé (100) selon l'une des revendications précédentes, l'enclenchement du mode d'apprentissage étant protégé par un mécanisme de sécurité.

8. Procédé (100) selon l'une des revendications précédentes, la première information de validité et/ou la deuxième information de validité et/ou la troisième information de validité étant mises à la disposition d'un autre appareil.

9. Procédé (100) selon l'une des revendications précédentes, l'exécution (120) de l'application dans l'environnement d'exécution (400) étant effectuée, pendant que le mode d'apprentissage est enclenché, sur un appareil et/ou sur un appareil d'essai de construction identique et/ou dans un environnement de simulation de l'appareil.

10. Procédé (100) selon l'une des revendications précédentes, la première information de validité et/ou la deuxième information de validité et/ou la troisième information de validité étant affectées aux instructions de programme sous forme d'instruction et/ou de sous-routine et/ou de bibliothèque.

11. Procédé (100) selon l'une des revendications précédentes, à des instructions de programme qui dépendent des instructions de programme avec la première information de validité et/ou la deuxième information de validité et/ou la troisième information de validité étant affectée une information de validité correspondante.

12. Procédé (100) selon l'une des revendications précédentes, une information de signalisation étant fournie lors de l'exécution d'instructions de programme sans information de validité.

13. Procédé (100) selon l'une des revendications 1 à 11, des instructions de programme sans information de validité étant retirées de l'application à l'enclenchement du mode de travail.

14. Environnement d'exécution (400) pour exécuter des instructions de programme d'une application de façon sécurisée et assistée par ordinateur, comportant :
- un premier module de commutation (410) pour enclencher un mode d'apprentissage de l'environnement d'exécution (400) ;
- un module d'exécution (420) pour exécuter l'application dans l'environnement d'exécution (400) pendant que le mode d'apprentissage est enclenché,
▪ des instructions de programme de l'application étant exécutées pour un scénario d'application donné et choisi ;
▪ l'environnement d'exécution (400) associant aux instructions de programme exécutées (210, 220, 310, 320) une première information de validité spécifique au scénario d'application ;
- un deuxième module de commutation (430) pour enclencher (130) un mode de travail de l'environnement d'exécution (400), l'environnement d'exécution (400), dans le mode de travail, vérifiant la première information de validité des instructions de programme et l'environnement d'exécution (400) exécutant les instructions de programme en fonction de leur information de validité.

15. Environnement d'exécution (400) selon la revendication 14, l'environnement d'exécution (400) étant un processeur ou une machine virtuelle ou un noyau de système d'exploitation avec utilisation d'une unité de gestion de mémoire.

16. Système comportant un environnement d'exécution (400) selon l'une des revendications 14-15.

17. Produit de programme informatique comportant des instructions de programme pour exécuter le procédé selon l'une des revendications 1-13.

18. Produit de programme informatique comportant des instructions de programme pour un appareil de création qui est configuré au moyen des instructions de programme pour créer l'environnement d'exécution (400) selon l'une des revendications 14-15.

19. Dispositif de fourniture du produit de programme informatique selon la revendication 17 ou 18, le dispositif de fourniture sauvegardant et/ou fournissant le produit de programme informatique.
